# EUROPÄISCHE PATENTSCHRIFT

(11) **EP 2 097 175 B1**
(45) Veröffentlichungstag und Bekanntmachung des Hinweises auf die Patenterteilung: **04.08.2010**
(21) Anmeldenummer: 08869076.3
(22) Anmeldetag: 03.12.2008
(51) Int. Cl.: B05B 12/02

(54) **TESTVERFAHREN UND TESTGERÄT ZUR FUNKTIONSPRÜFUNG EINER LACKIEREINRICHTUNG**
TEST METHOD AND TEST DEVICE FOR FUNCTIONAL TESTING OF A PAINTING DEVICE
PROCÉDÉ DE TEST ET APPAREIL DE TEST POUR LE CONTRÔLE DU FONCTIONNEMENT D'UN DISPOSITIF DE PEINTURE.

(30) Priorität: 21.12.2007 DE 102007062132
(43) Veröffentlichungstag der Anmeldung: 09.09.2009
(73) Patentinhaber: Dürr Systems GmbH, 74321 Bietigheim-Bissingen (DE)
(72) Erfinder: HERRE, Frank, 71739 Oberriexingen (DE)
(74) Vertreter: Beier, Ralph
(86) Internationale Anmeldenummer: PCT/EP2008/010241
(87) Internationale Veröffentlichungsnummer: WO 2009/083087

(56) Entgegenhaltungen:
- EP-A- 0 899 018
- DE-A1- 3 913 584
- JP-A- 10 244 205

## Beschreibung

Die Erfindung betrifft ein Testverfahren und ein entsprechendes Testgerät gemäß den Nebenansprüchen zur Funktionsprüfung einer Lackiereinrichtung.

Moderne Lackieranlagen zur Serienlackierung von Kraftfahrzeugkarosseriebauteilen weisen eine zunehmende Komplexität auf, da die Lackieranlagen aus einer Vielzahl von Komponenten bestehen, die teilweise kundenspezifisch miteinander kombiniert werden. Weiterhin ist aufgrund der höheren Auslastung und der höheren Dynamik der Lackieranlagen eine bessere Abstimmung der Anlagenkomponenten aufeinander notwendig.

So werden als Applikationsgerät beispielsweise sogenannte Air-Zerstäuber oder Hochrotationszerstäuber eingesetzt, die wahlweise mit oder ohne elektrostatische Beschichtungsmittelaufladung betrieben werden. Darüber hinaus können die Lackieranlagen wahlweise mit Einkomponentenlacken ("1K-Lack"), Zweikomponentenlacken ("2K-Lack"), Mehrkomponentenlacken ("xK-Lack") oder Pulverlack betrieben werden. Ferner kann ein Beschichtungsmittelmischer wahlweise extern angeordnet sein oder in den Zerstäuber integriert werden. Auch hinsichtlich der Spülung der Lackieranlage bestehen verschiedene Möglichkeiten, wie beispielsweise das sogenannte 1-Kreis-Spülen, das sogenannte 2-Kreis-Spülen sowie die Verwendung der bekannten Molchtechnik ("Reflow" und "Pushout"). Darüber hinaus kann die Dosierung des Beschichtungsmittels über Dosierpumpen oder über Dosierzylinder erfolgen und die elektrostatische Aufladung des Beschichtungsmittels kann wahlweise über Direktaufladung, über Außenaufladung oder im Falle von Pulverlack durch Reibungsaufladung erfolgen.

Moderne Lackieranlagen weisen also eine Vielzahl von Komponenten auf, die jeweils in unterschiedlichen Varianten ausgeführt sein können und miteinander funktionieren müssen.

Es ist deshalb bekannt, die Lackieranlagen zur Sicherstellung einer korrekten Funktion zwei Funktionsprüfungen zu unterziehen, wobei die erste Funktionsprüfung nach der Montage oder vor Inbetriebnahme durchgeführt wird, wohingegen die zweite Funktionsprüfung bei der Inbetriebnahme beim Kunden erfolgt.

Die beiden Funktionsprüfungen werden jedoch manuell durchgeführt, was mit verschiedenen Nachteilen verbunden ist, die nachfolgend kurz beschrieben werden.

Zum einen erfordert die manuelle Funktionsprüfung eine relativ lange Testdauer und in der Regel zwei Arbeitskräfte.

Ein weiterer Nachteil der manuellen Funktionsprüfung besteht in der personenabhängigen Qualität der Funktionsprüfung, da beispielsweise nachlässige oder unqualifizierte Arbeitskräfte Funktionsfehler der Lackieranlage möglicherweise übersehen.

Darüber hinaus ist eine Dokumentation der manuellen Funktionsprüfung schwierig, was bei Reklamationen oder Gewährleistungsansprüchen von Kunden zu rechtlichen Nachweisproblemen führen kann.

Ein wesentlicher Nachteil der manuellen Funktionsprüfungen sind die hohen Kosten für die Funktionsprüfung selbst und die möglichen hohen Folgefehlerkosten, die aufgrund von unerkannten Fehlern auftreten können.

Schließlich mussten die Funktionsprüfungen bisher aus Zeitmangel gelegentlich in ihrem Umfang reduziert werden, wenn beispielsweise ein Umbau der Lackieranlage in einer zeitlich begrenzten Betriebspause (z.B. am Wochenende) erfolgen musste.

Aus DE 101 08 010 A1 ist ein Prüfstift bekannt, der elektrisch mit einer Lackiereinrichtung verbunden werden kann, um beispielsweise die Spannungsversorgung der Lackiereinrichtung zu überprüfen. Dieser bekannte Prüfstift ermöglicht jedoch nur eine passive Überprüfung der Lackiereinrichtung und ist auch auf elektrische Prozessgrößen der Lackiereinrichtung beschränkt, so dass keine umfassende Funktionsprüfung möglich ist.

Ferner sind aus EP 0 846 498 A1, DE 103 07 719 A1, DE 201 22 250 U1, DE 101 08 010 A1, GB 2 321 206 A, DE 297 24 794 U1, US 6 758 423 B1, DE 601 04 666 T2, EP 166 092 A1, EP 350 605 A2, WO 2005/110613 A1 Steuer- bzw. Überwachungssysteme für Lackiereinrichtungen bekannt, die jedoch lediglich eine Ansteuerung bzw. Überwachung der Lackiereinrichtung im normalen Betrieb ermöglichen und deshalb auf die normale elektrische bzw. fluidische Ansteuerung angewiesen sind. Hierbei handelt es sich also nicht um gattungsgemäße Testgeräte bzw. Testverfahren.

Ferner ist zum Stand der Technik noch hinzuweisen auf JP 10 244 205 A, EP 0 899 018 A und DE 39 13 584 A1.

Der Erfindung liegt deshalb die Aufgabe zugrunde, die Funktionsprüfung von Lackiereinlagen zu verbessern.

Diese Aufgabe wird durch ein erfindungsgemäßes Testverfahren bzw. durch ein erfindungsgemäßes Testgerät gemäß den Nebenansprüchen gelöst.

Die Erfindung umfasst die allgemeine technische Lehre, die Funktionsprüfung von Lackiereinrichtungen (z.B. Lackieranlagen, Rotationszerstäuber) nicht mehr - wie bisher - manuell durchzuführen, sondern mittels eines Testgeräts.

Hierzu wird das Testgerät an die zu überprüfende Lackiereinrichtung (z.B. Lackieranlagen, Lackierroboter, Rotationszerstäuber, Pistolen, Potenzialtrennung, Sonderfarbversorgung, Reinigungsgeräte) angeschlossen.

Anschließend werden dann Prozessgrößen (z.B. Ventilstellungen, Lackstrom, Luftstrom, Drücke, Spülprogramme, elektrostatische Aufladungsspannung, etc.) der Lackiereinrichtung von dem Testgerät über den Anschluss erfasst.

Das Testgerät überprüft dann anhand der erfassten Prozessgrößen der Lackiereinrichtung die Funktionsfähigkeit der Lackiereinrichtung.

Gemäß der Erfindung erfasst das Testgerät nicht nur passiv die Prozessgrößen der Lackiereinrichtung, sondern beeinflusst die Prozessgrößen der Lackiereinrichtung aktiv, um die Reaktion der Lackiereinrichtung erfassen und überprüfen zu können. Es erfolgt also im Rahmen des erfindungsgemäßen Testverfahrens eine Ansteuerung der Lackiereinrichtung durch das Testgerät, woraufhin das Testgerät dann die Reaktion der Prozessgrößen der Lackiereinrichtung auf die Ansteuerung durch das Testgerät erfasst. Das Testgerät überprüft die Funktionsfähigkeit der Lackiereinrichtung dann anhand der erfassten Reaktion der Prozessgrößen der Lackiereinrichtung. Das Testgerät kann hierbei also bestimmte Testprozeduren vorgeben, die dann von der Lackiereinrichtung durchlaufen werden, wobei das Testgerät die Reaktion der Lackiereinrichtung bzw. das Verhalten der Lackiereinrichtung während der Testprozeduren erfasst und daraus die Funktionsfähigkeit der Lackiereinrichtung ermittelt.

In einem bevorzugten Ausführungsbeispiel der Erfindung wird das Testgerät mittels eines einzigen Adapters an die zu überprüfende Lackiereinrichtung angeschlossen. Dies ist vorteilhaft, weil die Verbindung zwischen dem Testgerät und der zu überprüfenden Lackiereinrichtung auf diese Weise schnell und einfach hergestellt werden kann.

Vorzugweise stellt der Adapter hierbei sowohl eine elektrische Kabelverbindung als auch eine fluidische Leitungsverbindung zwischen dem Testgerät und der zu überprüfenden Lackiereinrichtung her. Das Testgerät kann hierbei also über den Adapter elektrische Prozessgrößen (z.B. Ventilstellungen, elektrostatische Aufladungsspannungen) der Lackiereinrichtung erfassen und/oder beeinflussen. Darüber hinaus kann das Testgerät über den Adapter fluidische Prozessgrößen (z.B. Lackstrom, Spülmittelstrom, Luftstrom etc.) der Lackiereinrichtung erfassen und/oder beeinflussen.

Beispielsweise kann das Testgerät über den Adapter auch sämtliche Fluidströme erzeugen, die für den Betrieb der Lackiereinrichtung (z.B. Rotationszerstäuber) erforderlich sind, wie beispielsweise Antriebsluft für eine Rotationszerstäuberturbine, Lenkluft, Pulsluft, Spülmittelstrom und Lackstrom. Dies bietet vorteilhaft die Möglichkeit, dass die zu überprüfende Lackiereinrichtung allein mit dem Testgerät verbunden und von dem Testgerät geprüft werden kann, ohne dass eine weitere externe Verbindung der Lackiereinrichtung erforderlich ist.

In einer anderen Variante der Erfindung erfolgt die Verbindung zwischen dem Testgerät und der zu prüfenden Lackiereinrichtung dagegen durch mehrere Adapter, wobei ein erster Adapter die Lackiereinrichtung elektrisch mit dem Testgerät verbindet, während ein zweiter Adapter die Lackiereinrichtung fluidisch mit dem Testgerät verbindet.

Im Rahmen der Erfindung besteht die Möglichkeit, dass die zu überprüfende Lackiereinrichtung eine Dosierpumpe mit einer einstellbaren Förderleistung und ein Hauptnadelventil mit einer einstellbaren Ventilstellung aufweist. Hierzu ist zu bemerken, dass das Hauptnadelventil eine bestimmte Schaltzeit hat, die durch Drücke und Druckverhältnisse, Schlauchquerschnitte, Leitungslängen, Buslaufzeiten, Reibung, etc. gegeben ist. Diese Schaltzeit muss erfasst und durch die Steuerung der Lackiereinrichtung konstant gehalten werden. Diesem wird durch die Verzögerungszeit zwischen dem Steuersignal für das Hauptnadelventil und dem Dosierpumpenstart Rechnung getragen. Diese Verzögerungszeit kann sowohl einen positiven als auch einen negativen Wert annehmen. Dies ist u.a. abhängig von der Anlagenkonstellation und der Bauteilposition. Ist diese Verzögerungszeit falsch eingestellt, so entstehen Über- oder Unterdrücke, die Schlauchplatzer oder Beschichtungsstörungen führen können. Das Testgerät kann dann als funktionsrelevante Prozessgrößen die Förderleistung der Dosierpumpe und die Ventilstellung des Hauptnadelventils erfassen und/oder steuern und im Rahmen der Funktionsprüfung den zeitlichen Zusammenhang zwischen der Förderleistung der Dosierpumpe und der Ventilstellung des Hauptnadelventils auswerten.

Weiterhin besteht im Rahmen der Erfindung die Möglichkeit, dass die zu überwachende Lackiereinrichtung eine Pulsluftzuleitung und eine Spülmittelzuleitung aufweist, wobei über die Pulsluftzuleitung sogenannte Pulsluft zur Reinigung zugeführt wird, während über die Spülmittelzuleitung in herkömmlicher Weise ein Spülmittel zugeführt wird. Das Testgerät kann dann als funktionsrelevante Prozessgrößen der Lackiereinrichtung den Pulsluftstrom und den Spülmittelstrom erfassen und im Rahmen der Funktionsprüfung den zeitlichen Zusammenhang zwischen dem Pulsluftstrom und dem Spülmittelstrom auswerten.

Hierbei ist zu erwähnen, dass das Spülmittel bei einem Spülvorgang verunreinigt wird, so dass der Reinheitsgrad des austretenden Spülmittels von dem Testgerät als funktionsrelevante Prozessgröße ausgewertet werden kann, da der Reinheitsgrad des austretenden Spülmittels einen Rückschluss auf die Effizienz des Spülprogramms erlaubt. Beispielsweise kann der Reinheitsgrad des Spülmittels aus der Durchsichtigkeit, Lichtdurchlässigkeit bzw. Transparenz des Spülmittels abgeleitet werden, da verunreinigtes Spülmittel eine verringerte Lichtdurchlässigkeit hat. Im Rahmen des erfindungsgemäßen Testverfahrens kann deshalb vorgesehen sein, dass das Reinheitsgrad des austretenden Spülmittels als funktionsrelevante Prozessgröße der Lackiereinrichtung erfasst wird. In Abhängigkeit von dem ermittelten Reinheitsgrad des austretenden Spülmittels können dann Spülprogramme getestet bzw. automatisch erstellt werden.

Ferner besteht im Rahmen der Erfindung die Möglichkeit, dass die zu überwachende Lackiereinrichtung einen Mehrkomponentenlack appliziert, der als Komponenten einen Stammlack und einen Härter aufweist, wobei das Testgerät als funktionsrelevante Prozessgrößen der Lackiereinrichtung den Stammlackstrom und den Härterstrom erfasst und im Rahmen der Funktionsprüfung den zeitlichen Zusammenhang zwischen dem Stammlackstrom und dem Härterstrom auswertet.

Das erfindungsgemäße Testverfahren eignet sich auch zur Funktionsüberprüfung einer Lackiereinrichtung, die eine Anlagensteuerung aufweist, um den Betrieb der Lackiereinrichtung zu steuern. Die Anlagensteuerung erfasst in der Regel ohnehin zahlreiche Prozessgrößen der Lackiereinrichtung und ermöglicht darüber hinaus deren gezielte Steuerung im Rahmen einer Funktionsüberprüfung. Bei derartigen Lackiereinrichtungen mit einer Anlagensteuerung kann das Testgerät mit der Anlagensteuerung der Lackiereinrichtung verbunden werden und mit der Anlagensteuerung kommunizieren, damit das Testgerät über die Anlagensteuerung die interessierenden Prozessgrößen der Lackiereinrichtung erfassen und/oder beeinflussen kann.

Aus der vorstehenden Beschreibung ist bereits ersichtlich, dass die Erfindung nicht auf ein neuartiges Testverfahren zur Funktionsprüfung von Lackiereinrichtungen beschränkt ist, sondern auch ein entsprechendes Testgerät umfasst, welches das erfindungsgemäße Testverfahren ausführt.

Hierzu weist das erfindungsgemäße Testgerät einen Anschluss auf, über den das Testgerät mit der zu überprüfenden Lackiereinrichtung verbunden werden kann.

Darüber hinaus weist das erfindungsgemäße Testgerät eine Erfassungseinheit auf, die über den Anschluss Prozessgrößen der Lackiereinrichtung erfasst, wenn das Testgerät an die Lackiereinrichtung angeschlossen ist.

Ferner weist das erfindungsgemäße Testgerät eine Auswertungseinheit auf, die anhand der erfassten Prozessgrößen der Lackiereinrichtung die Funktionsfähigkeit der Lackiereinrichtung überprüft.

Die vorstehend erwähnte Erfassungseinheit und die ebenfalls vorstehende Auswertungseinheit können - wie auch die nachfolgend beschriebenen weiteren Funktionseinheiten des erfindungsgemäßen Testgeräts - hardwaremäßig als separate Bauteile bzw. Baugruppen realisiert sein. Alternativ besteht jedoch die Möglichkeit, dass die einzelnen Funktionseinheiten (z.B. Erfassungseinheit, Auswertungseinheit) als Softwaremodule in einem Testprogramm realisiert sind.

Gemäß der Erfindung weist das Testgerät zusätzlich eine Steuereinheit auf, um die Lackiereinrichtung anzusteuern, wobei die Auswertungseinheit bei der Überprüfung der Funktionsfähigkeit der Lackiereinrichtung die Reaktion der Prozessgrößen der Lackiereinrichtung auf die Ansteuerung durch die Steuereinheit berücksichtigt. Hierbei erfasst das Testgerät also nicht nur passiv die funktionsrelevanten Prozessgrößen der Lackiereinrichtung, sondern steuert die Lackiereinrichtung aktiv an. Das Testgerät kann hierbei also die Reaktion der Lackiereinrichtung auf eine bestimmte Ansteuerung überprüfen.

Weiterhin weist das Testgerät vorzugsweise eine Recheneinheit mit einem Programmspeicher auf, in dem mindestens ein Prüfprogramm gespeichert ist. Das Prüfprogramm kann beispielsweise vorgeben, in welcher Weise die zu überprüfende Lackiereinrichtung von dem Testgerät angesteuert wird.

Die Steuerung der Funktionsprüfung durch Prüfprogramme bietet den Vorteil einer besseren Reproduzierbarkeit der Funktionsprüfungen und verringert auch den Zeitaufwand für die Funktionsprüfung.

Hierbei besteht die Möglichkeit, dass verschiedene Prüfprogramme bereitgestellt werden, um jeweils bestimmte Funktionsbereiche der Lackiereinrichtung zu überprüfen. Beispielsweise können separate Prüfprogramme vorgesehen sein zur Prüfung der Dichtheit der Lackiereinrichtung, zur Prüfung der elektrostatischen Beschichtungsmittelaufladung, zur Prüfung der Dynamik der Lackiereinrichtung, zur Prüfung der Dosiergenauigkeit und zur Prüfung der einzelnen Beschichtungskanäle der Lackiereinrichtung.

Vorzugsweise verfügt das erfindungsgemäße Testgerät auch über einen integrierten Bildschirm und/oder einen integrierten Drucker, um das Prüfungsergebnis der Funktionsprüfung darstellen zu können.

Ferner besteht die Möglichkeit, dass das erfindungsgemäße Testgerät eine Schnittstelle aufweist, an die beispielsweise ein externer Drucker und/oder ein externer Bildschirm angeschlossen werden kann.

Die Erfindung ermöglicht also verschiedene Arten der Visualisierung der Prozessgrößen der Lackiereinrichtung, wozu auch Drucker, Schreiber und softwaretechnische Aufzeichnungsgeräte eingesetzt werden können, die in der zu überprüfenden Lackiereinrichtung vorhanden sind.

Hinsichtlich der funktionsrelevanten Prozessgrößen der Lackiereinrichtung bestehen vielfältige Möglichkeiten, von denen einige im Folgenden kurz beschrieben werden.

Beispielsweise kann das Testgerät im Rahmen der Funktionsprüfung die Ventilstellung von steuerbaren Ventilen (z.B. Hauptnadelventil) in der Lackiereinrichtung erfassen und/oder gezielt beeinflussen.

Weiterhin kann es sich bei den funktionsrelevanten Prozessgrößen um elektrische Prozessgrößen handeln, wie beispielsweise die Aufladespannung und/oder den Aufladestrom einer elektrostatischen Beschichtungsmittelaufladung.

Bei einer Spannungsregelung oder einer Stromregelung der elektrostatischen Beschichtungsmittelaufladung können auch regelungstechnische Größen (z.B. Regelabweichung, Stellgrößen) als funktionsrelevante Prozessgrößen erfasst bzw. gezielt beeinflusst werden.

Ferner ist es denkbar, dass als elektrische Prozessgrößen die Schalterstellungen von elektrischen Schaltern in der Lackiereinrichtung erfasst bzw. gezielt beeinflusst werden, was beispielsweise bei Erdschaltern und/oder Trennschaltern denkbar ist.

Ferner besteht die Möglichkeit, dass als funktionsrelevante elektrische Prozessgröße die elektrische Kapazität der Lackiereinrichtung oder eines Teils der Lackiereinrichtung erfasst wird.

Darüber hinaus können im Rahmen der Erfindung auch fluidische Prozessgrößen der Lackiereinrichtung erfasst und/oder gezielt beeinflusst werden.

Beispiele für derartige fluidische Prozessgrößen sind der Beschichtungsmittelstrom (Volumenstrom oder Massenstrom) eines von der Lackiereinrichtung applizierten Beschichtungsmittels oder der Druck, insbesondere der Beschichtungsmitteldruck, der Spülmitteldruck, der Lenkluftdruck, der Pulsluftdruck und/oder der Dosierdruck.

Weitere Beispiele für funktionsrelevante fluidische Prozessgrößen der Lackiereinrichtung sind der Spülmittelstrom, der Luftstrom, insbesondere der Lenkluftstrom oder der Pulsluftstrom.

Schließlich besteht noch die Möglichkeit, dass als funktionsrelevante Prozessgrößen der Lackiereinrichtungen Temperaturen in der Lackiereinrichtung erfasst werden.

Vorzugsweise ist das erfindungsgemäße Testgerät tragbar oder zumindest fahrbar, um einen flexiblen Einsatz des Testgeräts zu ermöglichen.

Weiterhin ist zu erwähnen, dass es sich bei der zu überprüfenden Lackiereinrichtung beispielsweise um einen Zerstäuber, einen Lackierroboter oder eine komplette Lackieranlage handeln kann.

Bei der Funktionsprüfung eines Zerstäubers besteht die Möglichkeit, dass das Testgerät direkt an den Anschlussflansch des Zerstäubers angeschlossen wird, so dass zum Betrieb des Zerstäubers keine weiteren Anschlüsse erforderlich sind.

Schließlich ist noch zu erwähnen, dass das Testgerät zur Funktionsprüfung auch drahtlos und leitungslos mit der Lackiereinrichtung verbunden werden kann. Dies ist insbesondere dann möglich, wenn die zu überprüfende Lackiereinrichtung durch eine integrierte Anlagensteuerung gesteuert wird.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine vereinfachte Querschnittsansicht eines Rotati- onszerstäubers sowie ein erfindungsgemäßes Testge- rät mit einem Adapter zum Anschluss an den An- schlussflansch des Rotationszerstäubers,
- Figur 1B: den Rotationszerstäuber aus Figur 1B mit ange- schlossenem Adapter während einer Funktionsüberprü- fung,
- Figur 2: das erfindungsgemäße Testverfahren in Form eines Flussdiagramms,
- Figur 3: ein vereinfachtes Blockschaltbild eines Ausfüh- rungsbeispiels eines erfindungsgemäßen Testgeräts,
- Figur 4: ein Ausführungsbeispiel eines nicht erfindungsgemä- ßen Testgeräts mit einem Adapter, der zwischen ei- nen Rotationszerstäuber und eine Roboterhandachse montiert werden kann, sowie
- Figur 5: ein weiteres Ausführungsbeispiel eines erfindungs- gemäßen Testgeräts mit einem Adapter, der anstelle eines Rotationszerstäubers an einer Roboterhandach- se montiert wird.

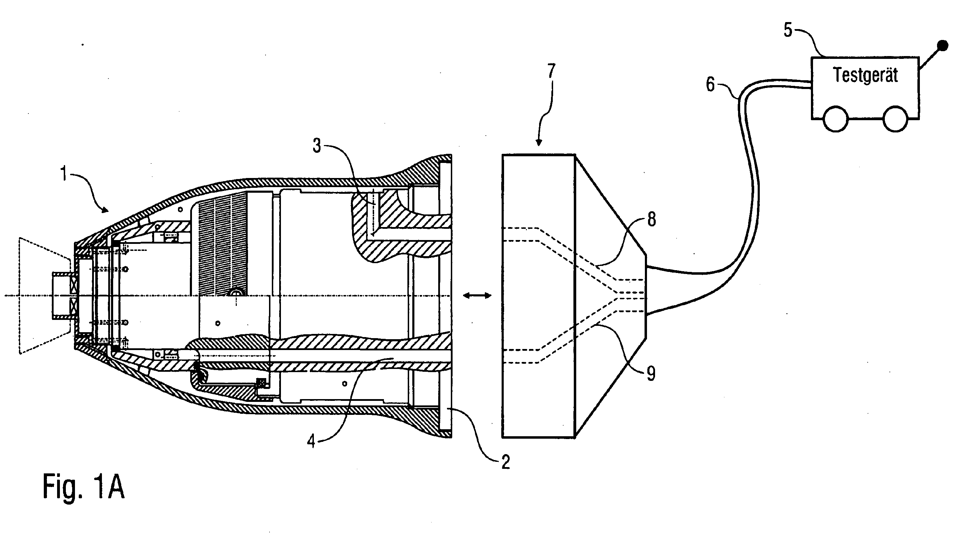

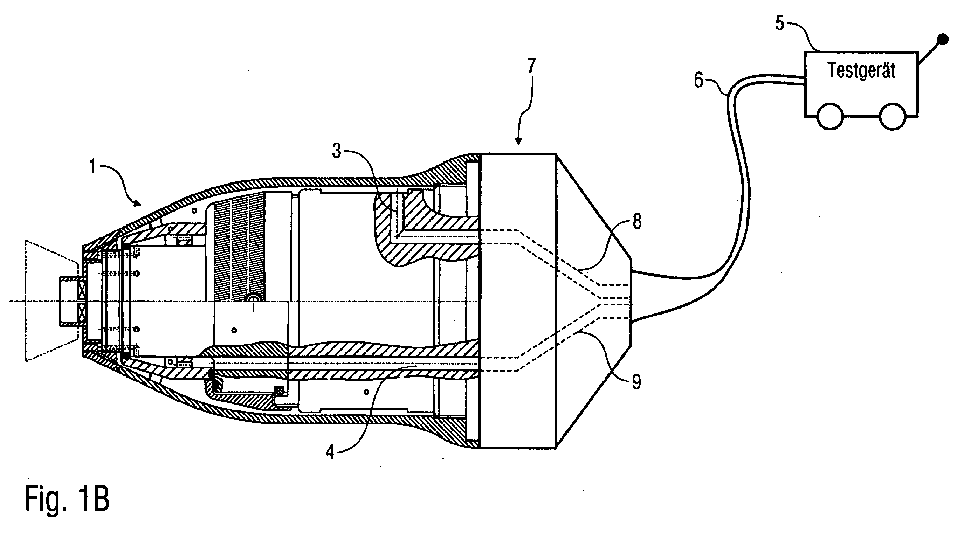

Die Figuren 1A und 1B zeigen zunächst einen herkömmlichen Rotationszerstäuber 1, der beispielsweise zur Lackierung von Kraftfahrzeugkarosserieteilen eingesetzt werden kann und dessen Aufbau und Funktionsweise beispielsweise in DE 10 2005 044 154 A1 beschrieben ist, so dass hinsichtlich des Aufbaus und der Funktionsweise des Rotationszerstäubers 1 auf die vorstehende Veröffentlichung verwiesen wird, deren Inhalt der vorliegenden Beschreibung in vollem Umfang zuzurechnen ist.

Für die Erfindung wesentlich ist lediglich die Tatsache, dass der Rotationszerstäuber 1 einen Anschlussflansch 2 aufweist, über den der Rotationszerstäuber 1 beispielsweise an einer Roboterhandachse eines Lackierroboters montiert werden kann.

Weiterhin erfolgt über den Anschlussflansch 2 des Rotationszerstäubers 1 eine fluidische und elektrische Kontaktierung des Rotationszerstäubers 1. So werden beispielsweise über zwei Lenkluftleitungen 3, 4 Lenkluftströmungen zugeführt, die getrennt voneinander steuerbar sind und eine Sprühstrahlformung ermöglichen.

Darüber hinaus weist der Anschlussflansch 2 des Rotationszerstäubers 1 noch weitere Anschlüsse auf, die zur fluidischen Kontaktierung des Rotationszerstäubers 1 dienen und in der Zeichnung zur Vereinfachung nicht dargestellt sind. Beispielsweise enthält der Anschlussflansch 2 des Rotationszerstäubers einen Anschluss zur Zuführung von Antriebsluft zum Antrieb einer in den Rotationszerstäuber 1 befindlichen Turbine, was an sich aus dem Stand der Technik bekannt ist und deshalb nicht näher beschrieben werden muss.

Eine weitere Möglichkeit besteht darin, den Flansch direkt an den Zerstäuber anzuschließen, z. B. ohne Glockenteller um damit dann auch die Zerstäuberfunktionen zu erfassen.

Darüber hinaus umfasst der Anschlussflansch 2 des Rotationszerstäubers 1 einen Anschluss zur Zuführung des zu applizierenden Lacks sowie einen Anschluss zur Rückführung des nicht applizierten Lacks, um eine Lackzirkulation zu ermöglichen.

Ferner kann der Anschlussflansch des Rotationszerstäubers 1 in Abhängigkeit von der Bauart des Rotationszerstäubers 1 weitere Anschlüsse für eine fluidische Kontaktierung des Rotationszerstäubers 1 aufweisen, was an sich ebenfalls aus dem Stand der Technik bekannt ist und deshalb nicht näher beschrieben werden muss.

Neben den vorstehend beschriebenen Anschlüssen zur fluidischen Kontaktierung des Rotationszerstäubers 1 weist der Anschlussflansch 2 auch elektrische Anschlüsse auf, um eine elektrische Kontaktierung des Rotationszerstäubers 1 zu ermöglichen. Beispielsweise kann der Anschlussflansch 2 auch einen elektrischen Anschluss aufweisen, um das von dem Rotationszerstäuber 1 applizierte Beschichtungsmittel durch eine Direktaufladung elektrostatisch aufzuladen, was an sich aus dem Stand der Technik bekannt ist.

Ferner kann über den Anschlussflansch 2 auch eine optische Kontaktierung des Rotationszerstäubers 1 erfolgen. So weist das Turbinenrad der in dem Rotationszerstäuber 1 befindlichen Turbine optische Markierungen auf, die von einer Lichtleitfaser abgetastet werden und eine Erfassung der Drehgeschwindigkeit und der Drehrichtung des Turbinenrads ermöglichen. Das andere Ende dieser Lichtleitfaser ist zu dem Anschlussflansch 2 geführt und wird dort entsprechend optisch ausgelesen.

Weiterhin zeigen die Zeichnungen ein erfindungsgemäßes Testgerät 5, das in diesem Ausführungsbeispiel als fahrbarer Handwagen ausgeführt ist und eine autarke Funktionsüberprüfung des Rotationszerstäubers 1 ermöglicht, ohne dass der Rotationszerstäuber 1 an weitere Versorgungsleitungen (z.B. Druckluft, Hochspannung) angeschlossen werden muss.

Hierzu wird das Testgerät über ein Leitungspaket 6 und einen Adapter 7 an den Anschlussflansch 2 des Rotationszerstäubers 1 angeschlossen.

Zum einen stellt der Adapter 7 hierbei eine mechanische Verbindung zu dem Anschlussflansch 2 des Rotationszerstäubers 1 her.

Zum anderen kontaktiert der Adapter 7 die verschiedenen Anschlüsse in dem Anschlussflansch 2 des Rotationszerstäubers 1, wobei in den Zeichnungen zur Vereinfachung nur entsprechende Anschlüsse 8, 9 für die beiden Lenkluftleitungen 3, 4 dargestellt sind. Tatsächlich enthält der Adapter 7 jedoch auch entsprechende Anschlüsse für die übrigen Anschlüsse (z.B. Lack, Antriebsluft, Hochspannung, Rückleitung) in dem Anschlussflansch 2 des Rotationszerstäubers 1.

Das Testgerät 5 enthält also einen Hochspannungsgenerator, über den die elektrostatische Beschichtungsmittelaufladung des Rotationszerstäubers 1 mit Hochspannung versorgt werden kann, wenn der Rotationszerstäuber 1 getestet werden soll.

Darüber hinaus enthält das Testgerät 5 eine Druckluftquelle, um den Rotationszerstäuber 1 zu Testzwecken mit der erforderlichen Druckluft zu beaufschlagen.

Darüber hinaus kann das Testgerät 5 dem Rotationszerstäuber 1 über den Adapter 7 auch ein Beschichtungsmittel oder eine entsprechende Simulationsflüssigkeit zuführen.

Das Testgerät 5 ermöglicht also einen realitätsgerechten Betrieb des Rotationszerstäubers 1 wie an einer Roboterhandachse eines Lackierroboters.

Darüber hinaus enthält das Testgerät 5 einen Steuerrechner mit einem Programmspeicher, in dem zahlreiche Prüfprogramme abgespeichert sind. Der Benutzer kann dann über eine Eingabeschnittstelle (z.B. Tastatur, Maus, Touch-Screen) eines der gewünschten Prüfprogramme auswählen, woraufhin das Testgerät 5 dann den Rotationszerstäuber 1 entsprechend dem ausgewählten Prüfprogramm ansteuert. Dabei wird in dem Testgerät 5 laufend das Verhalten des Rotationszerstäubers 1 gemessen, um die Funktion des Rotationszerstäubers 1 zu überprüfen. Beispielsweise wird über die optische Schnittstelle des Adapters 7 laufend die Drehzahl und die Drehrichtung des Rotationszerstäubers 1 gemessen. Darüber hinaus werden auch die Drücke in den verschiedenen Leitungen gemessen. Das Testgerät 5 überprüft dann, ob die Reaktion des Rotationszerstäubers 1 bzw. der Prozessgrößen (z.B. Lenkluftdruck, Antriebsluftdruck, elektrostatischer Aufladungsstrom) auf die Ansteuerung durch das Testgerät 5 auf eine korrekte Betriebsweise schließen lässt.

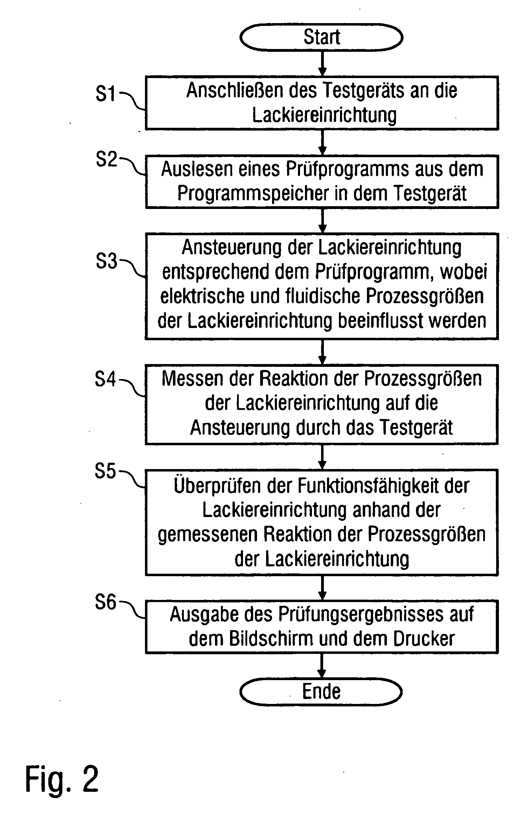

Im Folgenden wird nun nochmals das erfindungsgemäße Testverfahren anhand des in Figur 2 dargestellten Flussdiagramms erläutert.

In einem ersten Schritt S1 wird zunächst eine Verbindung zwischen dem Testgerät 5 und dem Rotationszerstäuber 1 hergestellt, indem der Adapter 7 an den Anschlussflansch 2 des Rotationszerstäubers 1 angeschlossen wird.

In einem weiteren Schritt S2 wählt der Benutzer dann über eine Eingabeschnittstelle (z.B. Tastatur) an dem Testgerät 5 ein Prüfprogramm aus dem Programmspeicher in dem Testgerät 5 aus.

Das Testgerät 5 steuert den Rotationszerstäuber 1 dann über den Adapter 7 in einem Schritt S3 entsprechend dem ausgewählten Prüfprogramm an, wobei elektrische Prozessgrößen (z.B. elektrostatische Aufladungsspannung) und fluidische Prozessgrößen (z.B. Lackstrom, Lenkluftstrom, Antriebsluftstrom) des Rotationszerstäubers 1 gezielt beeinflusst werden.

Während der Ansteuerung des Rotationszerstäubers 1 mit dem ausgewählten Prüfprogramm misst das Testgerät 5 in einem Schritt S4 laufend die Reaktion der Prozessgrößen (z.B. Antriebsluftdruck, Lenkluftdruck, elektrostatische Aufladungsspannung, etc.) des Rotationszerstäubers 1 auf die Ansteuerung durch das Testgerät 5.

In einem weiteren Schritt S5 wird dann anhand der gemessenen Reaktion des Rotationszerstäubers 1 die Funktionsfähigkeit des Rotationszerstäubers 1 geprüft.

Schließlich wird das Prüfungsergebnis S6 dann an dem Testgerät 5 über einen Bildschirm und einen integrierten Drucker ausgegeben. Darüber hinaus kann das Prüfungsergebnis von dem Testgerät 5 auch über eine Ausgabeschnittstelle in Dateiform ausgegeben oder abgespeichert werden.

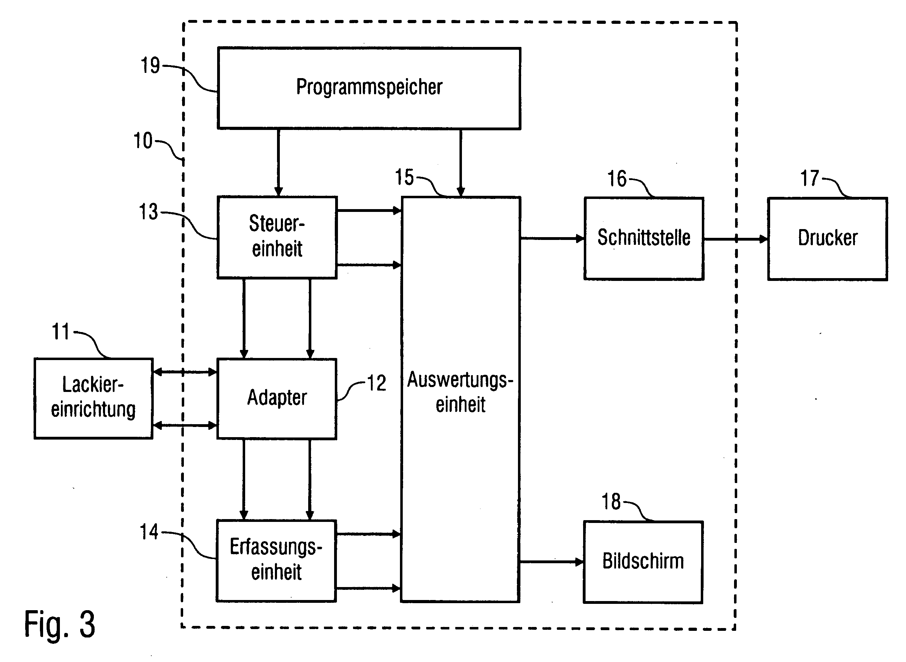

Figur 3 zeigt in stark vereinfachter Darstellung einen exemplarischen Aufbau eines erfindungsgemäßen Testgeräts 10 zur Funktionsprüfung einer Lackiereinrichtung 11.

Bei der Lackiereinrichtung 11 kann es sich beispielsweise um einen Rotationszerstäuber handeln, was bereits vorstehend detailliert beschrieben wurde. Alternativ besteht jedoch die Möglichkeit, dass es sich bei der zu überprüfenden Lackiereinrichtung 11 um einen kompletten Lackierroboter oder sogar um eine vollständige Lackierzelle handelt.

Zur Durchführung der Funktionsüberprüfung wird das Testgerät 10 über einen Adapter 12 mit der zu überprüfenden Lackiereinrichtung 11 verbunden, wobei der Adapter 12 eine fluidische und elektrische Kontaktierung der Lackiereinrichtung 11 ermöglicht.

Weiterhin verfügt das Testgerät 10 über eine Steuereinheit 13, die es ermöglicht, über den Adapter 12 gezielt Prozessgrößen der Lackiereinrichtung 11 zu beeinflussen, um anhand der anschließenden Reaktion der Lackiereinrichtung 11 auf die Ansteuerung durch die Steuereinheit 13 Rückschlüsse auf die Funktionsfähigkeit der Lackiereinrichtung 11 ziehen zu können.

Weiterhin weist das Testgerät 10 eine Erfassungseinheit 14 auf, die über den Adapter 12 die Prozessgrößen der Lackiereinrichtung 11 erfasst.

Darüber hinaus verfügt das Testgerät 10 über eine Auswertungseinheit 15, die eingangsseitig die Ansteuerung durch die Steuereinheit 13 erfasst sowie die Reaktion der von der Erfassungseinheit 14 gemessenen Prozessgrößen der Lackiereinrichtung 11. Die Auswertungseinheit 15 ermittelt dann aus diesen Eingangsgrößen, ob die Lackiereinrichtung 11 funktionsfähig ist oder bestimmte Fehler aufweist.

Das Prüfungsergebnis kann dann über eine Schnittstelle 16 auf einen externen Drucker 17 ausgegeben oder auf einem integrierten Bildschirm 18 dargestellt werden.

Schließlich verfügt das Testgerät 10 in diesem Ausführungsbeispiel noch über einen Programmspeicher 19, in dem zahlreiche verschiedene Prüfprogramme abgespeichert sind, wobei das gewünschte Prüfprogramm von dem Benutzer ausgewählt werden kann.

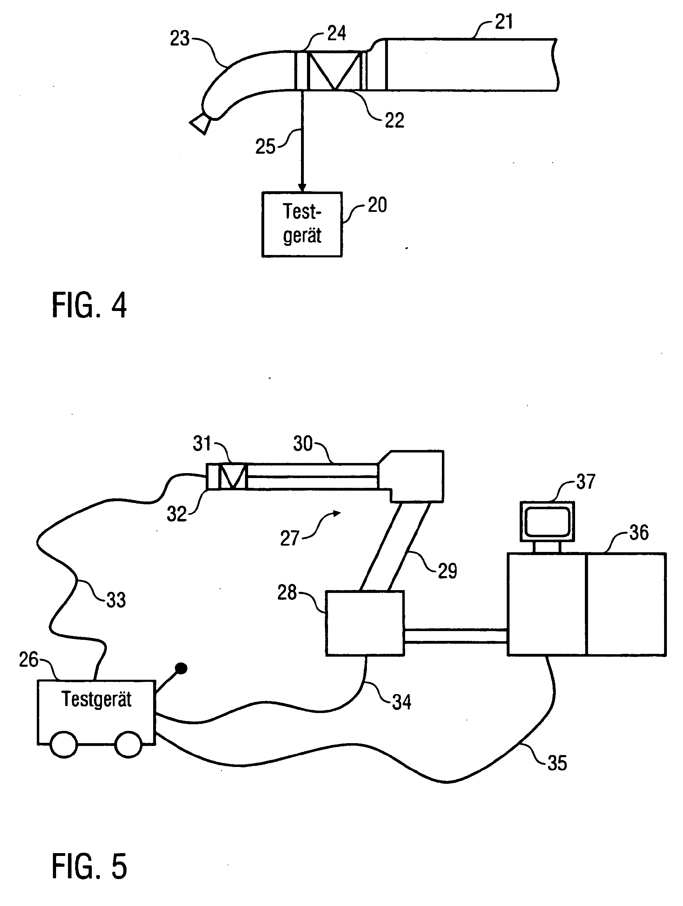

Figur 4 zeigt ein nicht erfindungsgemäßes Testgerät 20 zur Funktionsprüfung eines Lackierroboters, der an einem Roboterarm 21 und einer Roboterhandachse 22 einen Rotationszerstäuber 23 führt.

Zwischen dem Rotationszerstäuber 23 und der Roboterhandachse 22 ist hierbei ein Adapter 24 angeordnet, der die Roboterhandachse 22 mit dem Rotationszerstäuber 23 verbindet. Die von dem Lackierroboter zugeführten Fluide (z.B. Lack, Spülmittel, Lenkluft, etc.) werden hierbei durch den Adapter 24 hindurch geleitet, so dass der Adapter 24 über integrierte Sensoren die funktionsrelevanten Prozessgrößen messen kann, wie beispielsweise den Lackstrom, den Spülmittelstrom oder den Lenkluftstrom.

Das Testgerät 20 ist deshalb über eine Leitung 25 mit dem Adapter 24 verbunden, um die Sensordaten aus dem Adapter 24 auszulesen.

Schließlich zeigt Figur 5 ein Testgerät 26 zur Funktionsprüfung eines Lackierroboters 27, der in herkömmlicher Weise ausgebildet sein kann und eine Basis 28, zwei bewegliche Roboterarme 29, 30 und eine Roboterhandachse 31 aufweist, wobei an der Roboterhandachse 31 im normalen Betrieb eine Rotationszerstäuber montiert ist.

Die Zeichnung zeigt jedoch einen Testbetrieb, in dem anstelle eines Rotationszerstäubers ein Adapter 32 an der Roboterhandachse 31 montiert ist, wobei der Adapter 32 über ein Leitungspaket 33 mit dem Testgerät 26 verbunden ist.

Zum einen kann das Testgerät 26 über das Leitungspaket 33 die von dem Lackierroboter 27 abgegebenen Fluide (z.B. Lack, Lenkluft, Antriebsluft, etc.) aufnehmen und dabei den Druck und den Massen- bzw. Volumenstrom messen.

Zum anderen kann das Testgerät 26 über das Leitungspaket 33 einen Rotationszerstäuber simulieren und beispielsweise die Rückleitung von Spülmittel simulieren.

Darüber hinaus ist das Testgerät 26 über eine Leitung 34 auch mit der Basis 28 des Lackierroboters 27 verbunden, um den Lackierroboter 27 anzusteuern.

Schließlich ist das Testgerät 26 über eine Leitung 35 noch mit einer Anlagensteuerung 36 verbunden, die über einen Bildschirm 37 eine Visualisierung ermöglicht.

Die Erfindung ist nicht auf die vorstehend dargestellten bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Testverfahren zur Funktionsprüfung einer Lackiereinrichtung (1; 11; 21-23; 27), mit den folgenden Schritten:
a) Anschließen eines Testgeräts (5; 10; 20; 26) mittels eines Adapters (7; 12; 24; 32) an die Lackiereinrichtung (1; 11; 21-23; 27) oder an eine Anlagensteuerung (36) der Lackiereinrichtung (27),
**gekennzeichnet durch** folgende Schritte:
b) Ansteuerung der Lackiereinrichtung (1; 11; 21-23; 27) durch das Testgerät (5; 10; 20; 26), wobei das Testgerät (5; 10; 20; 26) die Lackiereinrichtung (1; 11; 21-23; 27) über den Adapter (7; 12; 24; 32) oder über die Anlagensteuerung (36) ansteuert und bestimmte Testprozeduren vorgibt,
c) Erfassen einer Reaktion der Prozessgrößen der Lackiereinrichtung (1; 11; 21-23; 27) auf die Ansteuerung durch das Testgerät (5; 10; 20; 26) während der Testprozeduren, wobei das Testgerät (5; 10; 20; 26) die interessierenden Prozessgrößen über den Adapter (7; 12; 32) oder über die Anlagensteuerung (36) erfasst,
d) Überprüfen der Funktionsfähigkeit der Lackiereinrichtung (1; 11; 21-23; 27) **durch** das Testgerät (5; 10; 20; 26) anhand der erfassten Reaktion der Prozessgrößen der Lackiereinrichtung (1; 11; 21-23; 27).

2. Testverfahren nach einem der vorhergehenden Ansprüche,
**dadurch gekennzeichnet, dass**
a) dass das Testgerät (5; 10) mittels eines einzigen Adapters (7; 12) an die zu überprüfende Lackiereinrichtung (1; 11) angeschlossen wird, und/oder
b) dass der Adapter (7; 12) sowohl eine elektrische Kabelverbindung als auch eine fluidische Leitungsverbindung zwischen dem Testgerät (5; 10) und der zu überprüfenden Lackiereinrichtung (1; 11) umfasst.

3. Testverfahren nach Anspruch 1, **dadurch gekennzeichnet, dass** das Testgerät (5; 10) mittels eines ersten Adapters elektrisch mit der Lackiereinrichtung (1; 11) und mittels eines zweiten Adapters fluidisch mit der Lackiereinrichtung (1; 11) verbunden wird.

4. Testverfahren nach einem der vorhergehenden Ansprüche,
**dadurch gekennzeichnet,**
a) **dass** die zu überprüfende Lackiereinrichtung (1; 11) eine Dosierpumpe mit einer einstellbaren Förderleistung und ein Hauptnadelventil mit einer einstellbaren Ventilstellung aufweist,
b) **dass** die erfassten Prozessgrößen der Lackiereinrichtung (1; 11) die Förderleistung der Dosierpumpe und die Ventilstellung des Hauptnadelventils umfassen, und
c) **dass** im Rahmen der Funktionsprüfung der zeitliche Zusammenhang zwischen der Förderleistung der Dosierpumpe und der Ventilstellung des Hauptnadelventils ausgewertet wird.

5. Testverfahren nach einem der vorhergehenden Ansprüche,
**dadurch gekennzeichnet,**
a) **dass** die zu überwachende Lackiereinrichtung (1; 11) eine Pulsluftzuleitung und eine Spülmittelzuleitung aufweist,
b) **dass** die erfassten Prozessgrößen der Lackiereinrichtung (1; 11) den Pulsluftstrom und den Spülmittelstrom umfassen,
c) **dass** im Rahmen der Funktionsprüfung der zeitliche Zusammenhang zwischen dem Pulsluftstrom und dem Spülmittelstrom ausgewertet wird.

6. Testverfahren nach einem der vorhergehenden Ansprüche,
**dadurch gekennzeichnet,**
a) **dass** die zu überwachende Lackiereinrichtung (1; 11) einen Mehrkomponentenlack appliziert, der als Komponenten mindestens einen Stammlack und mindestens eine weitere Komponente aufweist,
b) **dass** die erfassten Prozessgrößen der Lackiereinrichtung (1; 11) den Strom des Stammlacks und den Strom der weiteren Komponente umfassen,
c) **dass** im Rahmen der Funktionsprüfung der zeitliche Zusammenhang zwischen dem Strom des Stammlacks und dem Strom der weiteren Komponente ausgewertet wird.

7. Testverfahren nach einem der vorhergehenden Ansprüche,
**dadurch gekennzeichnet,**
a) **dass** die zu überprüfende Lackiereinrichtung (1; 11) eine Anlagensteuerung aufweist, die den Betrieb der Lackiereinrichtung (1; 11) steuert,
b) **dass** das Testgerät (5; 10) mit der Anlagensteuerung der Lackiereinrichtung (1; 11) kommuniziert,
c) **dass** das Testgerät (5; 10) von der Anlagensteuerung der Lackiereinrichtung (1; 11) die interessierenden Prozessgrößen der Lackiereinrichtung (1; 11) erhält, und/oder
d) **dass** das Testgerät (5; 10) über die Anlagensteuerung der Lackiereinrichtung (1; 11) die Prozessgrößen der Lackiereinrichtung (1; 11) beeinflusst.

8. Testverfahren nach einem der vorhergehenden Ansprüche,
**dadurch gekennzeichnet,**
a) **dass** die zu überprüfende Lackiereinrichtung ein Lackierroboter (21-24) ist, der an einem Roboterarm (21) und einer Roboterhandachse (22) einen Zerstäuber (23) führt, und
b) **dass** das Testgerät (20) über einen Adapter (24) mit dem Lackierroboter (21-24) verbunden wird, und
c) **dass** der Adapter (24) zwischen dem Zerstäuber (23) und der Roboterhandachse (22) oder zwischen der Roboterhandachse (22) und dem Roboterarm (21) angeordnet ist, und/oder
d) **dass** die zu überprüfende Lackiereinrichtung (27) einen Anschlussflansch (31) für einen Zerstäuber aufweist,
e) **dass** das Testgerät (26) über einen Adapter (32) mit dem Anschlussflansch (31) der Lackiereinrichtung (27) verbunden wird, wobei der Adapter (32) den Zerstäuber ersetzt.

9. Testgerät (5; 10) zur Durchführung eines Testverfahrens mit
a) einem Anschluss (7; 12) zur Verbindung des Testgeräts (5; 10; 20; 26) mit einer Lackiereinrichtung (1; 11; 21-23) oder mit einer Anlagensteuerung (36) der Lackiereinrichtung (27),
b) einer Erfassungseinheit (14), die über den Anschluss (7; 12) Prozessgrößen der Lackiereinrichtung (1; 11) erfasst, wenn das Testgerät (5; 10; 20; 26) an die Lackiereinrichtung (1; 11; 21-23) oder an die Anlagensteuerung (36) angeschlossen ist, und
c) einer Auswertungseinheit (15), die anhand der erfassten Prozessgrößen der Lackiereinrichtung (1; 11; 21-23; 27) die Funktionsfähigkeit der Lackiereinrichtung (1; 11; 21-23; 27) überprüft,
**dadurch gekennzeichnet,**
d) **dass** eine Steuereinheit (13) vorgesehen ist zur Ansteuerung der Lackiereinrichtung (1; 11), wobei das Testgerät (5; 10; 26) die Lackiereinrichtung (1; 11; 21-23; 27) über den Adapter (7; 12; 24; 32) oder über die Anlagensteuerung (36) ansteuert und bestimmte Testprozeduren vorgibt,
e) **dass** die Auswertungseinheit (15) bei der Überprüfung der Funktionsfähigkeit der Lackiereinrichtung (1; 11; 21-23; 27) die Reaktion der Prozessgrößen auf die Ansteuerung durch die Steuereinheit (13) während der Testprozeduren berücksichtigt, wobei das Testgerät (5; 10; 20; 26) die interessierenden Prozessgrößen über den Adapter (7; 12; 32) oder über die Anlagensteuerung (36) erfasst.

10. Testgerät (5; 10) nach Anspruch 9,
**dadurch gekennzeichnet,**
a) **dass** der Anschluss nur einen einzigen Adapter (7; 12) aufweist, über den das Testgerät (5; 10) an die zu überprüfende Lackiereinrichtung (1; 11) angeschlossen wird, und/oder
b) **dass** der Adapter (7; 12) sowohl eine elektrische Kabelverbindung als auch eine fluidische Leitungsverbindung zwischen dem Testgerät (5; 10) und der zu überprüfenden Lackiereinrichtung (1; 11) umfasst.

11. Testgerät (5; 10) nach einem der Ansprüche 9 bis 10,
**dadurch gekennzeichnet, dass** der Anschluss mindestens zwei Adapter umfasst, nämlich
- einen ersten Adapter zur elektrischen Verbindung des Testgeräts (5; 10) mit der Lackiereinrichtung (1; 11) und
- einen zweiten Adapter zur fluidischen Verbindung des Testgeräts (5; 10) mit der Lackiereinrichtung (1; 11).

12. Testgerät (5; 10) nach einem der Ansprüche 9 bis 11,
**gekennzeichnet durch**
a) eine Recheneinheit mit einem Programmspeicher (19), in dem mindestens ein Prüfprogramm gespeichert ist, und/oder
b) einen programmgesteuerten Rechner zur Durchführung der Funktionsprüfung der Lackiereinrichtung (1; 11),
c) einen Programmspeicher (19), in dem mehrere Prüfprogramme gespeichert sind, wobei die Prüfprogramme die Funktionsprüfung der Lackiereinrichtung (1; 11) steuern.

13. Testgerät (5; 10) nach Anspruch 12, **dadurch gekennzeichnet, dass** die gespeicherten Prüfprogramme jeweils funktionsspezifisch sind und folgende Funktionsbereiche der Lackiereinrichtung (1; 11) überprüfen:
a) Dichtheit der Lackiereinrichtung (1; 11),
b) Elektrostatische Beschichtungsmittelaufladung,
c) Dynamik der Lackiereinrichtung (1; 11),
d) Dosiergenauigkeit der Lackiereinrichtung (1; 11),
e) einzelne Beschichtungsmittelkanäle der Lackiereinrichtung (1; 11).

14. Testgerät (5; 10) nach einem der Ansprüche 9 bis 13,
**dadurch gekennzeichnet, dass** zur Darstellung eines Prüfungsergebnisses der Funktionsprüfung folgendes vorgesehen ist:
a) ein in das Testgerät (5; 10) integrierter Bildschirm (18),
b) ein in das Testgerät (5; 10) integrierter Drucker,
c) ein Ausgang (16) zur Verbindung mit einem externen Bildschirm oder einem externen Drucker (17).

15. Testverfahren nach einem der Ansprüche 1 bis 8 oder Testgerät (5; 10) nach einem der Ansprüche 9 bis 14, **dadurch gekennzeichnet, dass** das Testgerät (5; 10) im Rahmen der Funktionsprüfung der Lackiereinrichtung (1; 11) folgende Prozessgrößen der Lackiereinrichtung (1; 11) erfasst und/oder beeinflusst:
a) Ventilstellungen der Lackiereinrichtung (1; 11), und/oder
b) Elektrische Prozessgrößen der Lackiereinrichtung (1; 11), und/oder
c) Fluidische Prozessgrößen der Lackiereinrichtung (1; 11), und/oder
d) Temperaturen in der Lackiereinrichtung (1; 11), und/oder
e) Aufladungsspannung und/oder Aufladungsstrom einer elektrostatischen Beschichtungsmittelaufladung, einer Außenaufladung oder einer Kombinationsaufladung, und/oder
f) Regelungstechnische Größen einer Spannungsregelung oder einer Stromregelung der elektrostatischen Beschichtungsmittelaufladung, und/oder
g) Schalterstellungen von elektrischen Schaltern der Lackiereinrichtung (1; 11), und/oder
h) Elektrische Kapazität der Lackiereinrichtung (1; 11) oder eines Teils der Lackiereinrichtung (1; 11), und/oder
i) Beschichtungsmittelstrom eines von der Lackiereinrichtung (1; 11) applizierten Beschichtungsmittels, und/oder
j) Beschichtungsmitteldruck und/oder Spülmitteldruck, Lenkluftdruck, Pulsluftdruck und/oder Dosierdruck, und/oder
k) Spülmittelstrom eines Spülmittels zum Spülen der Lackiereinrichtung (1; 11), und/oder
l) Luftstrom, und/oder
m) Lenkluftstrom, und/oder
n) Pulsluftstrom, und/oder
o) Ventilstellung eines Hauptnadelventils, und/oder
p) Ventilstellung eines Spülmittelventils, und/oder
q) Ventilstellung eines Beschichtungsmittelventils.

16. Testverfahren nach einem der Ansprüche 1 bis 8 oder Testgerät (5; 10) nach einem der Ansprüche 9 bis 15,
**dadurch gekennzeichnet,**
a) **dass** das Testgerät (5; 10) tragbar oder fahrbar ist, und/oder
b) **dass** das Testgerät (5; 10) drahtlos und leitungslos mit der Lackiereinrichtung (1; 11) verbunden wird.

17. Testverfahren nach einem der Ansprüche 1 bis 8 oder Testgerät (5; 10) nach einem der Ansprüche 9 bis 16, **dadurch gekennzeichnet, dass** die zu überprüfende Lackiereinrichtung (1; 11)
a) ein Zerstäuber (1),
b) ein Rotationszerstäuber, oder
c) ein Lackierroboter ist, oder
d) dass die zu überprüfende Lackiereinrichtung (1; 11) ein Zerstäuber (1) ist, der einen Anschlussflansch (2) aufweist, wobeui das Testgerät (5; 10) an den Anschlussflansch (2) des Zerstäubers (1) angeschlossen wird oder anschließbar ist.

18. Testverfahren nach einem der Ansprüche 1 bis 8 oder Testgerät (5; 10) nach einem der Ansprüche 9 bis 17, **dadurch gekennzeichnet,**
a) **dass** das Testgerät Einstellwerte zum Betrieb der Lackiereinrichtung ermittelt, und/oder
b) **dass** die Einstellwerte folgende Größen umfassen:
- Steuerzeiten,
- Verzögerungen,
- Grenzwerte.

19. Verwendung eines Testgeräts (5; 10) nach einem der Ansprüche 9 bis 18, zur Funktionsprüfung einer Lackiereinrichtung (1; 11).

## Claims

1. Test method for checking the function of a painting device (1; 11; 21-23; 27), comprising the following steps:
a) Connecting a test apparatus (5; 10; 20; 26) by means of an adapter (7; 12; 24; 32) to the painting device (1; 11; 21-23; 27) or to an installation control (36) of the painting device (27),
**characterized by** the following steps:
b) Controlling the painting device (1; 11; 21-23; 27) by the test apparatus (5; 10; 20; 26), wherein the test apparatus (5; 10; 20; 26) controls the painting device (1; 11; 21-23; 27) via the adapter (7; 12; 24; 32) or via the installation control (36) and sets certain test procedures;
c) Detecting a reaction of the process parameters of the painting device (1; 11; 21-23; 27) on the control by the test apparatus (5; 10; 20; 26) during the test procedures, wherein the test apparatus (5; 10; 20; 26) detects the interesting process parameters via the adapter (7; 12; 32) or via the installation control (36),
d) Checking the functionality of the painting device (1; 11; 21-23; 27) by the test apparatus (5; 10; 20; 26) based on the detected reaction of the process parameters of the painting device (1; 11; 21-23; 27).

2. Test method according to any one of the preceding claims, **characterized in that**
a) the test apparatus (5; 10) is connected to the painting device (1; 11) to be checked by one single adapter (7; 12), and/or
b) the adapter (7; 12) includes an electrical cable connection as well as a fluidic line connection between the test apparatus (5; 10) and the painting device (1; 11) to be checked.

3. Test method according to claim 1, **characterized in that** the test apparatus (5; 10) is connected electrically to the painting device (1; 11) by a first adapter and fluidically to the painting device (1; 11) by a second adapter.

4. Test method according to any one of the preceding claims, **characterized in that**
a) the painting device (1; 11) to be checked has a dosing pump with an adjustable flow rate and a main needle valve with an adjustable valve position,
b) the detected process parameters of the painting device (1; 11) include the flow rate of the dosing pump and the valve position of the main needle valve, and
c) in the framework of the function check the temporal relationship between the flow rate of the dosing pump and the valve position of the main needle valve is evaluated.

5. Test method according to any one of the preceding claims, **characterized in that**
a) the painting device (1; 11) to be checked has a pulsed air feeding line and a flushing agent feeding line,
b) the detected process parameters of the painting device (1; 11) include the pulsed air flow and the flushing agent flow,
c) in the framework of the function check the temporal relationship between the pulsed air flow and the flushing agent flow is evaluated.

6. Test method according to any one of the preceding claims, **characterized in**
a) **that** the painting device (1; 11) to be checked applies a multi-component paint which includes as components at least one stock paint and at least one further component,
b) **that** the detected process parameters of the painting device (1; 11) include the flow of the stock paint and the flow of the further component,
c) **that** in the framework of the function check the temporal relationship between the flow of the stock paint and the flow of the further component is evaluated.

7. Test method according to any one of the preceding claims, **characterized in**
a) **that** the painting device (1; 11) to be checked has an installation control that controls the operation of the painting device (1; 11),
b) **that** the test apparatus (5; 10) communicates with the installation control of the painting device (1; 11),
c) **that** the test apparatus (5; 10) receives the interesting process parameters of the painting device (1; 11) from the installation control of the painting device (1;11), and/or
d) **that** the test apparatus (5; 10) affects the process parameters of the painting device (1; 11) via the installation control of the painting device (1; 11).

8. Test method according to any one of the preceding claims, **characterized in**
a) **that** the painting device to be checked is a painting robot (21-24) that guides an atomizer (23) at an robot arm (21) and a robot hand axis (22), and
b) **that** the test apparatus (20) is connected to the painting robot (12-24) via an adapter (24), and
c) **that** the adapter (24) is arranged between the atomizer (23) and the robot hand axis (22) or between the robot hand axis (22) and the robot arm (21), and/or
d) **that** the painting device (27) to be checked has a connection flange (31) for an atomizer,
e) **that** the test apparatus (26) is connected to the connection flange (31) of the painting device (27) via an adapter (32), wherein the adapter (32) replaces the atomizer.

9. Test apparatus (5; 10) for carrying out a test method, comprising
a) a connection (7; 12) for connecting the test apparatus (5; 10; 20; 26) to a painting device (1; 11; 21-23) or to an installation control (36) of the painting device (27),
b) a detection unit (14) that detects process parameters of the paining device (1; 11) via the connection (7; 12), when the test apparatus (5; 10; 20; 26) is connected to the painting device (1; 11; 21-23) or to the installation control (36), and
c) an evaluation unit (15) that checks the functionality of the painting device (1; 11; 21-23; 27) based on the detected process parameters of the painting device (1; 11; 21-23; 27),
**characterized in**
d) **that** a control unit (13) is provided for controlling the painting device (1; 11), wherein the test apparatus (5; 10; 26) controls the painting device (1; 11; 21-23; 27) via the adapter (7; 12; 24; 32) or via the installation control (36) and sets certain test procedures,
e) **that** the evaluation unit (15) considers during checking the functionality of the painting device (1; 11; 21-23; 27) the reaction of the process parameters on the control by the control unit (13) during the test procedures, wherein the test apparatus (5; 10; 20; 26) detects the interesting process parameters via the adapter (7; 12; 32) or via the installation control (36).

10. Test apparatus (5; 10) according to claim 9, **characterized in that**
a) the connection has only one single adapter (7; 12) via which the test apparatus (5; 10) is connected to the painting device (1; 11) to be checked, and/or
b) the adapter (7; 12) includes an electrical cable connection as well as a fluidic line connection between the test apparatus (5; 10) and the painting device (1; 11) to be checked.

11. Test apparatus (5; 10) according to any one of claims 9 to 10, **characterized in that** the connection includes at least two adapters, namely
- a first adapter for electrical connection of the test apparatus (5; 10) to the painting device (1; 11), and
- a second adapter for fluidic connection of the test apparatus (5; 10) to the painting device (1; 11).

12. Test apparatus (5; 10) according to any one of claims 9 to 11, **characterized by**
a) a computing unit having a program memory (19) in which at least one checking program is stored, and/or
b) a program-controlled computer for carrying out the function check of the painting device (1; 11),
c) a program memory (19) in which multiple checking programs are stored, wherein the checking programs control the function check of the painting device (1; 11).

13. Test apparatus (5; 10) according to claim 12, **characterized in that** the stored checking programs are respectively function specific and check the following functional fields of the painting device (1; 11):
a) tightness of the painting device (1; 11),
b) electrostatic coating agent charge,
c) dynamic of the painting device (1; 11),
d) dosing precision of the painting device (1; 11),
e) individual coating agent channels of the painting device (1; 11).

14. Test apparatus (5; 10) according to any one of claims 9 to 13, **characterized in that** for illustrating a check result of the function check the following is provided:
a) a screen (18) integrated in the test apparatus (5; 10),
b) a printer integrated in the test apparatus (5; 10),
c) an output (16) for connection to an external screen or an external printer (17).

15. Test method according to any one of claims 1 to 8 or test apparatus (5; 10) according to any one of claims 9 to 14, **characterized in that** the test apparatus (5; 10) detects and/or affects in the framework of the function check of the painting device (1; 11) the following process parameters of the painting device (1; 11):
a) valve positions of the painting device (1; 11), and/or
b) electrical process parameters of the painting device (1; 11), and/or
c) fluidic process parameters of the painting device (1; 11), and/or
d) temperatures in the painting device (1; 11), and/or
e) charging voltage and/or charging current of an electrostatic coating agent charge, external charge or combination charge, and/or
f) regulation-technical parameters of a voltage regulation or a current regulation of the electrostatic coating agent charge, and/or
g) switch positions of electrical switches of the painting device (1; 11), and/or
h) electrical capacity of the painting device (1; 11) or a part of the painting device (1; 11), and/or
i) coating agent flow of a coating agent applied from the painting device (1; 11), and/or
j) coating agent pressure and/or flushing agent pressure, shaping air pressure, pulsed air pressure and/or dosing pressure, and/or
k) flushing agent flow of a flushing agent for flushing of the painting device (1; 11), and/or
l) air flow, and/or
m) shaping air flow, and/or
n) pulsed air flow, and/or
o) valve position of a main needle valve, and/or
p) valve position of a flushing agent valve, and/or
q) valve position of a coating agent valve.

16. Test method according to any one of claims 1 to 8 or test apparatus (5; 10) according to any one of claims 9 to 15, **characterized in that**
a) the test apparatus (5; 10) is portable or mobile, and/or
b) the test apparatus (5; 10) is connected wireless and lineless to the painting device (1; 11).

17. Test method according to any one of claims 1 to 8 or test apparatus (5; 10) according to any one of claims 9 to 16, **characterized in that** the painting device (1; 11) to be checked
a) is an atomizer (1),
b) is a rotary atomizer, or
c) is a painting robot, or
d) that the painting device (1; 11) to be checked is an atomizer (1) having a connection flange (2), wherein the test apparatus (5; 10) is connected or connectable to the connection flange (2) of the atomizer (1).

18. Test method according to any one of claims 1 to 8 or test apparatus (5; 10) according to any one of claims 9 to 17, **characterized in**
a) **that** the test apparatus determines adjusting values for operating the painting device, and/or
b) **that** the adjusting values include the following parameters:
- control times,
- delays,
- limiting values.

19. Use of a test apparatus (5; 10) according to any one of claims 9 to 18, for checking the function of a painting device (1; 11).

## Revendications

1. Procédé de test pour contrôler le fonctionnement d'un dispositif de peinture (1 ; 11 ; 21-23 ; 27), comportant les étapes suivantes :
a) raccordement d'un appareil de test (5 ; 10 ; 20 ; 26) par l'intermédiaire d'un adaptateur (7 ; 12 ; 24 ; 32) au dispositif de peinture (1 ; 11 ; 21-23 ; 27) ou à une commande (36) du dispositif de peinture (27)
**caractérisé par** les étapes suivantes :
b) activation du dispositif de peinture (1 ; 11 ; 21-23 ; 27) par l'appareil de test (5 ; 10 ; 20 ; 26), ledit appareil de test (5 ; 10 ; 20 ; 26) activant le dispositif de peinture (1 ; 11 ; 21-23 ; 27) par l'intermédiaire de l'adaptateur (7 ; 12 ; 24 ; 32) ou par l'intermédiaire de la commande (36) du dispositif de peinture et définissant des procédures de test déterminées,
c) détection d'une réaction des grandeurs du processus du dispositif de peinture (1 ; 11 ; 21-23 ; 27) en réponse à l'activation par l'appareil de test (5 ; 10 ; 20 ; 26) pendant les procédures de test, ledit appareil de test (5 ; 10 ; 20 ; 26) détectant les grandeurs du processus intéressantes via l'adaptateur (7 ; 12 ; 24 ; 32) ou via la commande (36) du dispositif de peinture,
d) contrôle du bon fonctionnement du dispositif de peinture (1 ; 11 ; 21-23 ; 27) par l'appareil de test (5 ; 10 ; 20 ; 26) à l'appui de la réaction détectée des grandeurs du processus du dispositif de peinture (1 ; 11 ; 21-23 ; 27).

2. Procédé de test selon l'une des revendications précédentes, **caractérisé**
a) **en ce que** l'appareil de test (5 ; 10) est raccordé au moyen d'un seul adaptateur (7 ; 12) au dispositif de peinture (1 ; 11) à tester, et/ou
b) **en ce que** l'adaptateur (7 ; 12) comporte une liaison par câble électrique, de même qu'une liaison par conduite de fluide entre l'appareil de test (5 ; 10) et le dispositif de peinture (1 ; 11) à tester.

3. Procédé de test selon la revendication 1, **caractérisé en ce que** l'appareil de test (5 ; 10) est relié électriquement au dispositif de peinture (1 ; 11) par un premier adaptateur et est relié par liaison fluidique au dispositif de peinture (1 ; 11) par un deuxième adaptateur.

4. Procédé de test selon l'une quelconque des revendications précédentes, **caractérisé**
a) **en ce que** le dispositif de peinture (1 ; 11) à tester comporte une pompe de dosage avec un débit réglable et une vanne principale à pointeau avec une position réglable,
b) **en ce que** les grandeurs du processus détectées du dispositif de peinture (1 ; 11) contiennent le débit de la pompe de dosage et la position de la vanne principale à pointeau, et
c) **en ce que** dans le cadre du test de fonctionnement est analysée la corrélation dans le temps entre le débit de la pompe de dosage et la position de la vanne principale à pointeau.

5. Procédé de test selon l'une quelconque des revendications précédentes, **caractérisé**
a) **en ce que** le dispositif de peinture (1 ; 11) à tester comporte une conduite d'acheminement d'air pulsé et une conduite d'acheminement de produit de lavage,
b) **en ce que** les grandeurs du processus détectées du dispositif de peinture (1 ; 11) contiennent le flux d'air pulsé et le flux de produit de lavage,
c) **en ce que** dans le cadre du test de fonctionnement est analysée la corrélation dans le temps entre le flux d'air pulsé et le flux de produit de lavage.

6. Procédé de test selon l'une quelconque des revendications précédentes, **caractérisé**
a) **en ce que** le dispositif de peinture (1 ; 11) à tester applique une peinture à plusieurs composants, laquelle contient comme composants au moins une peinture mère et au moins un autre composant,
b) **en ce que** les grandeurs du processus détectées du dispositif de peinture (1 ; 11) contiennent le flux de la peinture mère et le flux de l'autre composant,
c) **en ce que** dans le cadre du test de fonctionnement est analysée la corrélation dans le temps entre le flux de la peinture mère et le flux de l'autre composant.

7. Procédé de test selon l'une quelconque des revendications précédentes, **caractérisé**
a) **en ce que** le dispositif de peinture (1 ; 11) à tester comporte une commande, qui commande le fonctionnement du dispositif de peinture (1 ; 11),
b) **en ce que** l'appareil de test (5 ; 10) communique avec la commande du dispositif de peinture (1 ; 11),
c) **en ce que** l'appareil de test (5 ; 10) reçoit de la commande du dispositif de peinture (1 ; 11) les grandeurs du processus intéressantes du dispositif de peinture (1 ; 11), et/ou
d) **en ce que** l'appareil de test (5 ; 10) influence les grandeurs du processus du dispositif de peinture (1 ; 11) par l'intermédiaire de la commande du dispositif de peinture (1 ; 11).

8. Procédé de test selon l'une quelconque des revendications précédentes, **caractérisé**
a) **en ce que** le dispositif de peinture (1 ; 11) à tester est un robot de peinture (21-24) qui, sur un bras (21) du robot et un axe de la main (22) du robot, guide un pulvérisateur (23), et
b) **en ce que** l'appareil de test (20) est relié au robot de peinture (21-24) par un adaptateur (24), et
c) **en ce que** l'adaptateur (24) est disposé entre le pulvérisateur (23) et l'axe de la main (22) du robot ou entre l'axe de la main (22) du robot et le bras (21) du robot, et/ou
d) **en ce que** le dispositif de peinture (27) à tester comporte une bride d'assemblage (31) pour un pulvérisateur,
e) **en ce que** l'appareil de test (26) est relié à la bride d'assemblage (31) du dispositif de peinture (27) par un adaptateur (32), ledit adaptateur (32) remplaçant le pulvérisateur.

9. Appareil de test (5 ; 10) pour la mise en oeuvre d'un procédé de test, comportant
a) un raccord (7 ; 12) pour relier l'appareil de test (5 ; 10 ; 20 ; 26) à un dispositif de peinture (1 ; 11 ; 21-23) ou à une commande (36) du dispositif de peinture (27),
b) une unité de détection (14) qui, via le raccord (7 ; 12), détecte des grandeurs du processus du dispositif de peinture (1 ; 11), lorsque l'appareil de test (5 ; 10 ; 20 ; 26) est raccordé au dispositif de peinture (1 ; 11 ; 21-23) ou à la commande (36) du dispositif de peinture, et
c) une unité d'analyse (15) qui, à l'appui des grandeurs du processus du dispositif de peinture (1 ; 11 ; 21-23 ; 27), contrôle le bon fonctionnement du dispositif de peinture (1 ; 11 ; 21-23 ; 27), **caractérisé**
d) **en ce qu**'il est prévu une unité de commande (13) pour activer le dispositif de peinture (1 ; 11), l'appareil de test (5 ; 10 ; 20 ; 26) activant le dispositif de peinture (1 ; 11 ; 21-23 ; 27) via l'adaptateur (7 ; 12 ; 24 ; 32) ou via la commande (36) du dispositif de peinture et définissant des procédures de test déterminées,
e) en ce que l'unité d'analyse (15), pendant le contrôle du bon fonctionnement du dispositif de peinture (1 ; 11 ; 21-23 ; 27), tient compte de la réaction des grandeurs du processus en réponse à l'activation par l'unité de commande (13) pendant les procédures de test, l'appareil de test (5 ; 10 ; 20 ; 26) détectant les grandeurs du processus intéressantes via l'adaptateur (7 ; 12 ; 32) ou via la commande (36) du dispositif de peinture.

10. Appareil de test (5 ; 10) selon la revendication 9, **caractérisé**
a) **en ce que** le raccord comporte uniquement un seul adaptateur (7 ; 12), par l'intermédiaire duquel l'appareil de test (5 ; 10) est raccordé au dispositif de peinture (1 ; 11) à tester, et/ou
b) **en ce que** l'adaptateur (7 ; 12) comporte une liaison par câble électrique, de même qu'une liaison par conduite de fluide entre l'appareil de test (5 ; 10) et le dispositif de peinture (1 ; 11) à tester.

11. Appareil de test (5 ; 10) selon l'une quelconque des revendications 9 à 10, **caractérisé en ce que** le raccord comporte au moins deux adaptateurs, à savoir
- un premier adaptateur pour relier électriquement l'appareil de test (5 ; 10) avec le dispositif de peinture (1 ; 11), et
- un deuxième adaptateur pour relier par une liaison fluidique l'appareil de test (5 ; 10) avec le dispositif de peinture (1 ; 11).

12. Appareil de test (5 ; 10) selon l'une quelconque des revendications 9 à 11, **caractérisé par**
a) une unité d'ordinateur avec une mémoire programme (19), dans laquelle est stocké au moins un programme de test, et/ou
b) un ordinateur commandé par programme pour la mise en oeuvre du test de fonctionnement du dispositif de peinture (1 ; 11),
c) une mémoire programme (19), dans laquelle sont stockés plusieurs programmes de test, lesdits programmes de test commandant le test de fonctionnement du dispositif de peinture (1 ; 11).

13. Appareil de test (5 ; 10) selon la revendication 12, **caractérisé en ce que** les programmes de test stockés en mémoire sont chacun spécifiques à une fonction et testent les domaines de fonction suivants du dispositif de peinture (1 ; 11) :
a) l'étanchéité du dispositif de peinture (1 ; 11)
b) la charge électrostatique du produit de revêtement,
c) la dynamique du dispositif de peinture (1 ; 11),
d) la précision de dosage du dispositif de peinture (1 ; 11),
e) les différents canaux pour produit de revêtement du dispositif de peinture (1 ; 11).

14. Appareil de test (5 ; 10) selon l'une quelconque des revendications 9 à 13, **caractérisé en ce que** pour la représentation d'un résultat du test de fonctionnement, les éléments suivants sont prévus :
a) un écran (18) intégré dans l'appareil de test (5 ; 10),
b) une imprimante intégrée dans l'appareil de test (5 ; 10),
c) une sortie (16) pour la liaison avec un écran externe ou une imprimante (17) externe.

15. Procédé de test selon l'une quelconque des revendications 1 à 8 ou appareil de test (5 ; 10) selon l'une quelconque des revendications 9 à 14, **caractérisé en ce que** l'appareil de test (5 ; 10), dans le cadre du test de fonctionnement du dispositif de peinture (1 ; 11), détecte et/ou influence les grandeurs du processus suivantes du dispositif de peinture (1 ; 11) :
a) les positions des vannes du dispositif de peinture (1 ; 11), et/ou
b) les grandeurs électriques du dispositif de peinture (1 ; 11), et/ou
c) les grandeurs fluidiques du dispositif de peinture (1 ; 11), et/ou
d) les températures dans le dispositif de peinture (1 ; 11), et/ou
e) la tension de charge et/ou le courant de charge d'une charge électrostatique du produit de revêtement, d'une charge externe ou d'une charge combinée, et/ou
f) les grandeurs techniques d'un réglage de la tension ou d'un réglage du courant de la charge électrostatique du produit de revêtement, et/ou
g) les positions des interrupteurs électriques du dispositif de peinture (1 ; 11), et/ ou
h) la capacité électrique du dispositif de peinture (1 ; 11) ou d'une partie du dispositif de peinture (1 ; 11), et/ou
i) le flux d'un produit de revêtement appliqué par le dispositif de peinture (1 ; 11), et/ou
j) la pression du produit de revêtement et/ou la pression du produit de lavage, la pression de l'air de guidage, la pression de l'air pulsé et/ou la pression de dosage, et/ou
k) le flux d'un produit de lavage pour le lavage du dispositif de peinture (1 ; 11), et/ou
l) le flux d'air, et/ ou
m) le flux d'air de guidage, et/ou
n) le flux d'air pulsé, et/ ou
o) la position d'une vanne principale à pointeau, et/ou
p) la position d'une vanne pour produit de lavage, et/ou
q) la position d'une vanne pour produit de revêtement.

16. Procédé de test selon l'une quelconque des revendications 1 à 8 ou appareil de test (5 ; 10) selon l'une quelconque des revendications 9 à 15, **caractérisé**
a) **en ce que** l'appareil de test (5 ; 10) peut être porté ou roulé, et/ou
b) **en ce que** l'appareil de test (5 ; 10) est relié sans fil et sans conduite au dispositif de peinture (1 ; 11).

17. Procédé de test selon l'une quelconque des revendications 1 à 8 ou appareil de test (5 ; 10) selon l'une quelconque des revendications 9 à 16, **caractérisé en ce que** le dispositif de peinture (1 ; 11) à tester est
a) un pulvérisateur (1),
b) un pulvérisateur rotatif, ou
c) un robot de peinture, ou
d) **en ce que** le dispositif de peinture (1 ; 11) à tester est un pulvérisateur (1), qui comporte une bride d'assemblage (2), l'appareil de test (5 ; 10) étant raccordé ou pouvant être raccordé à la bride d'assemblage (2) du pulvérisateur (1).

18. Procédé de test selon l'une quelconque des revendications 1 à 8 ou appareil de test (5 ; 10) selon l'une quelconque des revendications 9 à 17, **caractérisé**
a) **en ce que** l'appareil de test détermine des valeurs de réglage pour le fonctionnement du dispositif de peinture, et/ou
b) **en ce que** les valeurs de réglage contiennent les grandeurs suivantes :
- temps de commande,
- retards,
- valeurs limites.

19. Utilisation d'un appareil de test (5 ; 10) selon l'une quelconque des revendications 9 à 18, pour le test de fonctionnement d'un dispositif de peinture (1 ; 11).
